# EUROPEAN PATENT APPLICATION

(11) **EP 4 484 676 A1**
(43) Date of publication of application: **01.01.2025**
(21) Application number: 24184586.6
(22) Date of filing: 26.06.2024
(51) Int. Cl.: E04H 4/00, F16B 7/04

(54) **CONNECTING MEMBER, CONNECTING PIPE STRUCTURE AND DETACHABLE FRAME**

(30) Priority: 27.06.2023 CN 202310774461
(71) Applicant: Dongguan Polyfilm Plastic Products Company Limited, Dong Guan City, Guang Dong Province 523000 (CN)
(72) Inventor: ZHANG, YiFeng, Dong Guan City,, 523000 (CN)
(74) Representative: Finnegan Europe LLP

(57) **Abstract**

The present disclosure relates to a connecting member, a connecting pipe structure and a detachable frame. The connecting member for connecting a first connecting pipe with a second connecting pipe includes: a connecting body and an elastic arm. The connecting body is configured to be arranged in the first connecting pipe and in interference fit with the first connecting pipe. The elastic arm is connected to the connecting body and provided with a locking projection. The first connecting pipe is provided with a first through hole, the second connecting pipe is provided with a second through hole, and the locking projection is configured to be engaged with the first through hole and the second through hole.

## Description

### CROSS REFERENCE TO RELATED APPLICATION

This application claims priority of Chinese Patent Application No. 2023107744613, entitled "Connecting Member, Connecting Pipe Structure and Detachable Frame" and filed on June 27, 2023, which is hereby incorporated in its entirety by reference.

### TECHNICAL FIELD

The present disclosure relates to the technical field of pipe connection, and more particularly, to a connecting member, a connecting pipe structure and a detachable frame.

### BACKGROUND

The frame of the detachable pool is generally constructed by using a connecting pipe structure. In the connecting pipe structure, different pipes thereof are generally connected to each other by using pins. However, such connecting pipe structure has a problem of difficult and inefficient mounting. And as a portion of the pins may protrude out of the pipes, the user experience is influenced. Moreover, the pipes or the pins may rust during use.

### SUMMARY

Accordingly, the present disclosure provides a connecting member, and a connecting pipe structure and a detachable frame both provided with the connecting member, which allow a quick connection between connecting pipes.

According to an aspect of the present disclosure, a connecting member for connecting a first connecting pipe with a second connecting pipe is provided. The connecting member includes a connecting body and an elastic arm. The connecting body is arranged in the first connecting pipe and in interference fit with the first connecting pipe. The elastic arm is connected to the connecting body and provided with a locking projection. The first connecting pipe is provided with a first through hole, the second connecting pipe is provided with a second through hole, and the locking projection is configured to be engaged with the first through hole and the second through hole.

Further, one end of the elastic arm serves as a connecting end and is connected to the connecting body, and the other end of the elastic arm serves as a free end and extends in a direction perpendicular to a cross section of the connecting body.

Further, one end of the elastic arm serves as a connecting end and is connected to the connecting body, and the other end of the elastic arm serves as a free end and is provided with the locking projection.

Further, the connecting body has a hollow annular structure.

Further, the connecting end of the elastic arm is connected to an inner wall of the connecting body.

Further, the connecting member further includes a positioning projection arranged on the connecting body or the elastic arm.

The first connecting pipe is provided with a positioning hole, and the positioning projection is configured to be engaged with the positioning hole.

Further, the positioning projection is arranged on the connecting body and is located at a position of the connecting body close to a connecting end of the elastic arm.

Further, the connecting body has a first recess located on at least one of upper and lower sides of the connecting body, and the positioning projection is arranged on the first recess.

Further, at least one of left and right sides of the connecting body has an elastic supporting arm configured to generate an elastic deformation bending inwards.

Further, the connecting member further includes a supporting rib arranged on the connecting body and protruding from an outer surface of the connecting body. The supporting rib is configured to be abutted against an inner wall of the first connecting pipe.

Further, the elastic arm is provided with a reinforcing rib, which is connected between the locking projection, the elastic arm and the connecting body, or between the locking projection and the elastic arm.

Further, the connecting body is integrated with the elastic arm.

Further, the connecting member is made of an elastically deformable material.

Further, the locking projection is provided with a wedge surface configured to be pushed against by an inner wall of the second connecting pipe to allow the locking projection being engaged with or disengaged from the second through hole.

According to another aspect of the present disclosure, a connecting pipe structure is provided. The connecting pipe structure includes a first connecting pipe and a connecting member in any of the above embodiments.

According to a further aspect of the present disclosure, a detachable frame is provided. The detachable frame includes a first connecting pipe, a second connecting pipe and the connecting member according to any of the above embodiments. The second connecting pipe is detachably connected to the first connecting pipe by the connecting member.

The connecting member, the connecting pipe structure and the detachable frame according to the embodiments of the present disclosure fix the connecting member in the first connecting pipe by means of interference fit, avoiding excessive through holes being arranged on the first connecting pipe and the second connecting pipe, and in particular avoiding the through holes being arranged on the upper side surface of both the first connecting pipe and the second connecting pipe. Therefore, risks of corrosion and rusting caused by water entering the connecting pipe structure through the through holes during use is reduced, and the connecting pipe structure is more compact and more attractive in appearance. The connecting pipe structure and the connecting member in the present disclosure realize quick connection between the first connecting pipe and the second connecting pipe, reduce mounting difficulty, and improve mounting efficiency.

### BRIEF DESCRIPTION OF THE DRAWINGS

FIG. 1 is a schematic structural view of a detachable frame according to an embodiment of the present disclosure;
FIG. 2 is an enlarged view of portion A in FIG. 1;
FIG. 3 is a cross-sectional view of the connecting member of the detachable frame in FIG. 1;

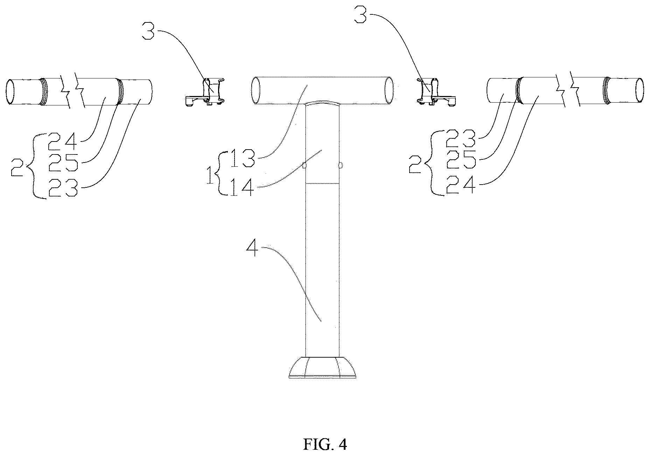

FIG. 4 is an exploded view of the detachable frame in FIG. 1;
FIG. 5 is a schematic structural view of the connecting member;
FIG. 6 is a schematic structural view of the connecting member in FIG. 5 in another view;
FIG. 7 is a rear view of the connecting member in FIG. 6; and
FIG. 8 is a right view of the connecting member in FIG. 6.

### Reference numerals

1. first connecting pipe, 11. first through hole, 12. positioning hole, 13. transverse pipe section, 14. vertical pipe section, 15. first insertion end,
2. second connecting pipe, 21. second through hole, 22. second insertion end, 23. insertion pipe section, 24. connecting pipe section, 25. limiting step,
3. connecting member, 31. connecting body, 311. elastic connecting arm, 3111. first recess, 312. elastic supporting arm, 3121. second recess, 32. elastic arm, 321. connecting end, 322. free end, 323. reinforcing ribs, 323a. first reinforcing rib, 323b. second reinforcing rib, 324. connecting rib, 33. locking projection, 331. wedge surface, 331a. first wedge surface, 331b. second wedge surface, 34. positioning projection, 35. supporting rib,
   D1. first direction, D2. second direction, D3. third direction.

### DETAILED DESCRIPTION OF THE EMBODIMENTS

In order to make the above objects, features and advantages of the present disclosure more obvious and understandable, the following detailed description of specific embodiments of the present disclosure is given in conjunction with the accompanying drawings. Many specific details are described in the following description in order to facilitate a full understanding of the present disclosure. However, the present disclosure can be implemented in many other ways different from those described herein, and those skilled in the art can make similar modifications without contradicting the connotations of the present disclosure, and thus the present disclosure is not limited by the specific embodiments disclosed below.

In the description of the present disclosure, it should be understood that the terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential", etc. indicate the orientation or position relationship based on the orientation or position relationship shown in the accompanying drawings, only to facilitate and simplify the description of the present disclosure, and not to indicate or imply that the device or element referred to must have a specific orientation, and/or must be constructed and operated in a specific orientation, therefore it cannot be interpreted as a limitation of the present disclosure.

Furthermore, the terms "first" and "second" are used for descriptive purposes only and are not to be construed as indicating or implying relative importance or implicitly specifying the number of technical features indicated. Thus, the features qualified with "first" and "second" may explicitly or implicitly include at least one such feature. In the description of the present disclosure, the meaning of "plurality" means at least two, such as two, three, etc., unless otherwise specified and defined.

In the present disclosure, unless otherwise specified and defined, the terms "mounted", "attached", "connected", "fixed", etc. should be used in a broad sense. For example, it can be a fixed connection, a removable connection, or in one piece; it can be a mechanical connection or an electrical connection; it can be a direct connection or an indirect connection through an intermediate medium; and it can be a communication within two components or an interactive relationship between two components. To those ordinary skilled in the art, the specific meaning of the above terms in the present disclosure can be understood according to the specific situation.

In the present disclosure, unless otherwise specified and defined, the first feature being "on" or "under" the second feature may refer to that the first feature and the second feature are in direct contact, or that the first and second features are in indirect contact through an intermediary. Moreover, the first feature being "above", "over" and "on" the second feature may refer to that the first feature is directly above or diagonally above the second feature, or indicate that the horizontal height of the first feature is greater than that of the second feature. The first feature being "below", "under", and "beneath" the second feature may refer to that the first feature is directly below or diagonally below the second feature, or indicate that the horizontal height of the first feature is less than that of the second feature.

It should be noted that when an element is described as "fixed to" or "arranged on" another element, the element may be directly on the other element or an intermediate element may be provided between the elements. When an element is considered to be "connected" to another element, the element may be directly connected to the other element or connected to the other element by an intermediate element. The terms "vertical", "horizontal", "up", "down", "left", "right" and similar expressions used herein are for illustrative purposes only and are not meant to be the only means of implementation.

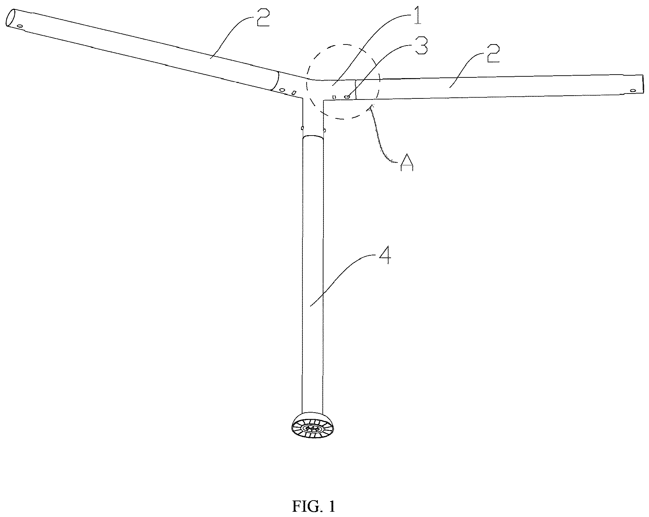

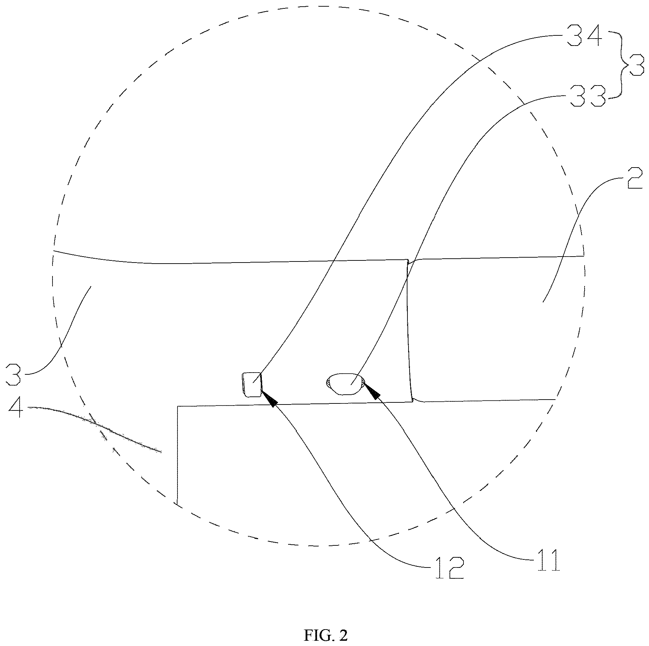

A connecting member, a connecting pipe structure having the connecting member, and a detachable frame having the connecting pipe structure are provided according to an embodiment of the present disclosure. As shown in FIGs. 1 to 3, the frame includes a first connecting pipe 1, a second connecting pipe 2, and the connecting member 3. The second connecting pipe 2 is detachably connected to the first connecting pipe 1 by the connecting member 3. In this embodiment, the frame may be configured as, for example, a support frame of a folding pool. The first connecting pipe 1 is, for example, a T-shaped pipe of the support frame, and the second connecting pipe 2 is, for example, a transverse pipe of the support frame. That is, the connecting member 3 may be configured for connection between the T-shaped pipe and the transverse pipe. The frame further includes a fourth connecting pipe 4 connected to the first connecting pipe 1.

Further, the first connecting pipe 1 includes a transverse pipe section 13 and a vertical pipe section 14 which are interconnected with each other. The transverse pipe section 13 is arranged horizontally and the vertical pipe section 14 is arranged vertically, so that the first connecting pipe 1 has a T-shaped structure as a whole. In this embodiment, both ends of the transverse pipe section 13 are respectively connected to the second connecting pipe 2 by the connecting member 3. In other embodiments, the transverse pipe section 13 may also be connected to the second connecting pipe 2 by the connecting member 3 at only one end. Referring to FIGs. 1 to 3, the vertical pipe section 14 is connected to the fourth connecting pipe 4. The fourth connecting pipe 4 is, for example, a vertical pipe. The fourth connecting pipe 4 may be detachably connected to the first connecting pipe 1 by a locating snap, or may be detachably connected to the first connecting pipe 1 by the connecting member 3, or may be connected to the first connecting pipe 1 by means of threaded connection.

In this embodiment, the second connecting pipe 2 includes an insertion pipe section 23 and a connecting pipe section 24 which are interconnected. An outer diameter of the insertion pipe section 23 is smaller than that of the connecting pipe section 24, so that a limiting step 25 is formed between the insertion pipe section 23 and the connecting pipe section 24.

In an embodiment, as shown in FIGs. 1 to 3, the connecting pipe structure includes a first connecting pipe 1 and a connecting member 3. The connecting pipe structure can be configured as the support frame of the folding pool. The connecting pipe structure is configured to connect the first connecting pipe 1 with the second connecting pipe 2 by the connecting member 3. In other embodiments, the connecting member 3 may be configured to, for example, be connected between the second connecting pipe 2 and the second connecting pipe 2, or between the fourth connecting pipe 4 and the fourth connecting pipe 4, or be connected between the first connecting pipe 1 and the fourth connecting pipe 4, or the like.

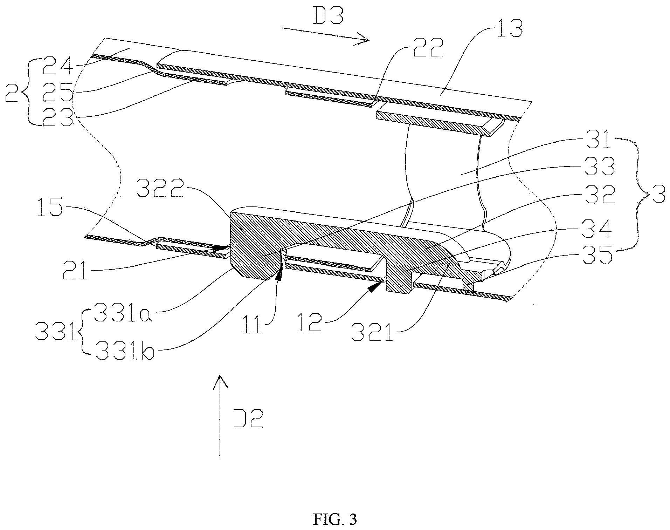

In an embodiment, as shown in FIG. 3, the connecting member 3 is configured to connecting the first connecting pipe 1 with the second connecting pipe 2. The connecting member 3 includes a connecting body 31 and an elastic arm 32. The connecting body 31 is arranged on the first connecting pipe 1 and in interference fit with the first connecting pipe 1. That is, at least a portion of the connecting body 31 is abutted against an inner wall of the first connecting pipe 1, so that the connecting body 31 is fixed in the first connecting pipe 1 by friction between the connecting body 31 and the inner wall of the first connecting pipe 1. In some embodiments, the connecting member 3 may be preset in the first connecting pipe 1 during production process to reduce an assembly process for the second connecting pipe 2 and the first connecting pipe 1. The elastic arm 32 is connected to the connecting body 31 and provided with a locking projection 33. The first connecting pipe 1 is provided with a first through hole 11, the second connecting pipe 2 is provided with a second through hole 21, and the locking projection 33 is configured to be engage with the first through hole 11 and the second through hole 21. In this embodiment, the second connecting pipe 2 is inserted into the first connecting pipe 1, and the locking projection 33 passes through the second through hole 21 and the first through hole 11 in sequence to connect the first connecting pipe 1 with the second connecting pipe 2 together. In another unshown embodiment, it can be that the first connecting pipe 1 is inserted into the second connecting pipe 2, and the locking projection 33 passes through the first through hole 11 and the second through hole 21 in sequence to connect the first connecting pipe 1 with the second connecting pipe 2. In this embodiment, the first through hole 11 is arranged on a lower side surface of the transverse pipe section 13, and the second through hole 21 is arranged on both the lower side surface and the upper side surface of the second connecting pipe 2. The lower side surface described herein and the upper side surface to be mentioned hereinafter are in relation to an up and down direction during using the first connecting pipe 1 and the second connecting pipe 2. Specifically, the transverse pipe section 13 and the second connecting pipe 2 both are straight cylindrical pipes, the first through hole 11 is arranged on a portion of the wall of the transverse pipe section 13 closest to a placement plane (e.g., the ground) for the connecting pipe structure, and the second through hole 21 is provided on the portion of the wall of the second connecting pipe 2 closest to the placement plane (e.g., the ground) for the connecting pipe structure and on a portion of the wall of the second connecting pipe 2 farthest from the placement plane (e.g., the ground) for the connecting pipe structure. In other embodiments, the second through hole 21 may be arranged only on the lower side surface of the second connecting pipe 2.

The connecting pipe structure and the connecting member 3 provided according to this embodiment fix the connecting member 3 on the first connecting pipe 1 by means of the interference fit, avoiding excessive through holes being arranged on the first connecting pipe 1 and the second connecting pipe 2, and in particular, avoiding the through holes being arranged on the upper side of both the first connecting pipe 1 and the second connecting pipe 2. Therefore, the risk of corrosion and rusting caused by water entering the connecting pipe structure through the through holes by gravity during using is reduced, and the connecting pipe structure is more compact and more attractive in appearance. The connecting pipe structure and the connecting member 3 of this embodiment realize quick connection between the first connecting pipe 1 and the second connecting pipe 2, reduce the mounting difficulty, and improve the mounting efficiency.

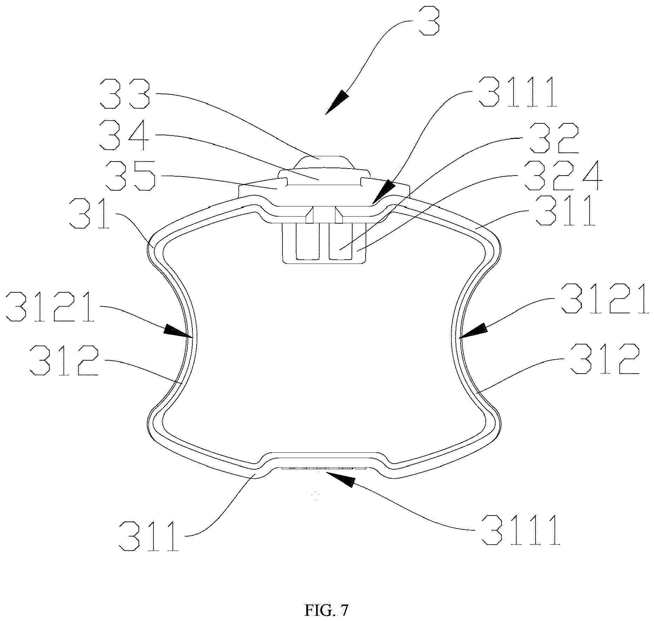

In an embodiment, as shown in FIGs. 3, 5 and 6, the connecting body 31 is integrated with the elastic arm 32. Specifically, the connecting member 3 is an integral member injection-molded by elastically deformable material like plastic material. The connecting body 31 is of a hollow annular structure, so that the connecting body 31 is properly deformed during mounting into the first connecting pipe 1, to allow the connecting member 3 being installed into and in interference fit with the first connecting pipe 1. In this embodiment, referring to FIG. 7, a cross section of the connecting body 31 has an irregular outer profile. When the connecting member 3 is positioned in the first connecting pipe 1, a portion of the outer surface of the connecting body 31 is pressed by the inner wall of the first connecting pipe 1, and the other portion of the outer surface of the connecting body 31 is not in contact with the inner wall of the first connecting pipe 1, thereby further increasing the elastic deformation of the connecting body 31, and facilitating to mount and fix the connecting member 3 into the first connecting pipe 1. In other embodiments, the connecting body 31 may be of a solid construction, as long as the connecting body 31 has a certain elasticity to make the connecting member 3 be mounted into and be in interference fit with the first connecting pipe 1.

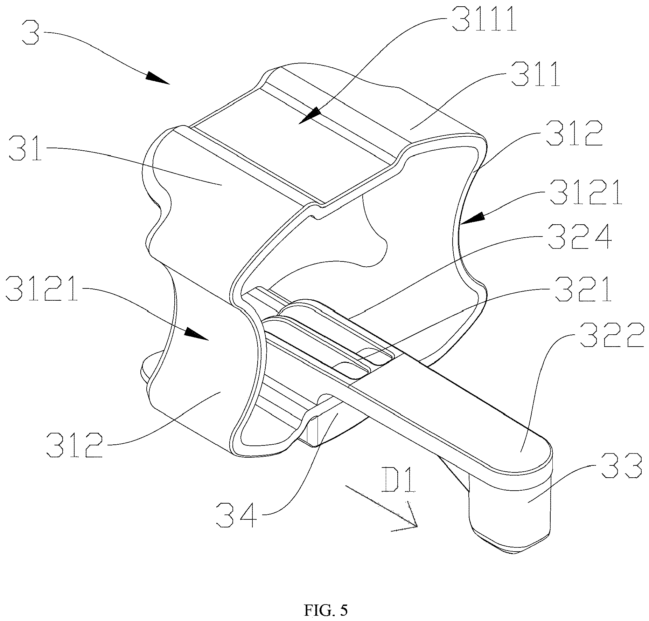

Continuing to refer to FIGs. 5 to 7, the connecting body 31 includes two elastic connecting arms 311 and two elastic supporting arms 312. The two elastic connecting arms 311 are oppositely arranged, the two elastic supporting arms 312 are oppositely arranged, and both ends of each elastic connecting arm 311 are respectively connected to one end of each of the two elastic supporting arms 312, thereby forming a hollow annular structure. In this embodiment, when the connecting member 3 is mounted in the transverse pipe section 13 of the first connecting pipe 1, the two elastic connecting arms 311 are spaced apart from each other along the up and down direction of the transverse pipe section 13, and the two elastic supporting arms 312 are spaced apart from each other along a left and right direction of the transverse pipe section 13.

Further, the connecting body 31 has a first recess 3111 to facilitate the elastic deformation of the connecting body 31. In this embodiment, both the two elastic connecting arms 311 are provided with the first recess 3111 recessed toward a hollow inner cavity of the connecting body 31. In other embodiments, it may also be possible that only one of the elastic connecting arms 311 is provided with the aforementioned first recess 3111. For example, only the elastic connecting arm 311 located below may be provided with the first recess 3111 to facilitate to arrange a structure such as a positioning projection 34 to be mentioned below.

Further, both the two elastic supporting arms 312 have a second recess 3121 recessed toward the hollow inner cavity of the connecting body 31, thereby increasing the elastic deformation of the connecting body 31, and facilitating the connecting member 3 being placed into and being interference fitted with the connecting pipe 1. Specifically, the second recess 3121 is formed by a concave curved surface. In other embodiments, it may also be possible that only one of the elastic supporting arms 312 may have the aforementioned second recess 3121.

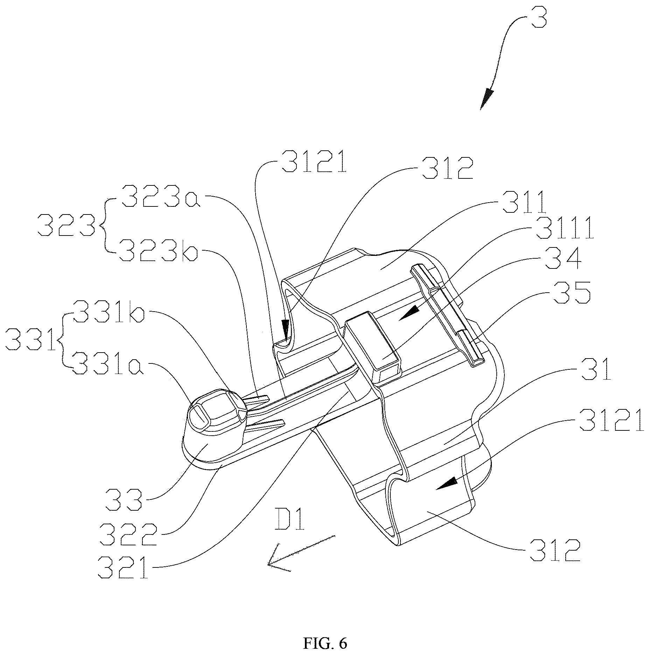

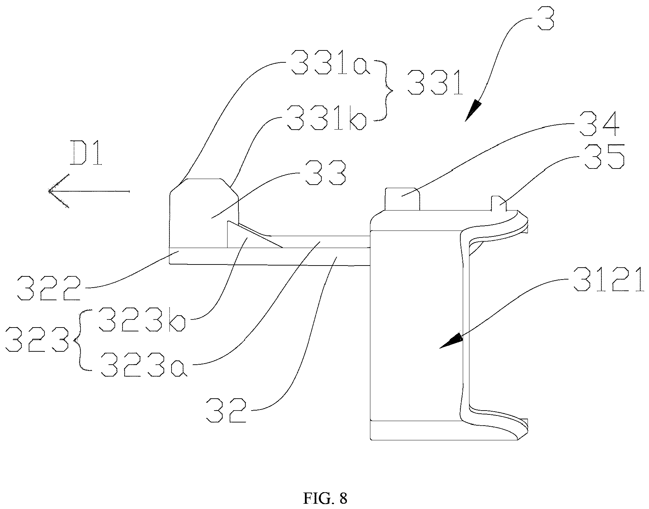

In an embodiment, as shown in FIGs. 6 to 8, the connecting member 3 further includes a supporting rib 35. The supporting rib 35 is arranged on the outer surface of the connecting body 31 and protrudes from the outer surface of the connecting body 31, and the supporting rib 35 is configured to be abutted against the inner wall of the first connecting pipe 1, further increasing the frictional force between the connecting member 3 and the inner wall of the first connecting pipe 1, so that the connecting member 3 is more firmly connected to the first connecting pipe 1.

In an embodiment, as shown in FIGs. 5 to 8, one end of the elastic arm 32 as a connecting end 321 is connected to the connecting body 31. A first direction D1 is a direction perpendicular to the cross section of the connecting body 31. The other end of the elastic arm 32 serves as a free end 322 and extends in a direction substantially parallel to the first direction D1. In other embodiments, an extension direction of the free end 322 of the elastic arm 32 is at an angle to the first direction D 1.

Referring to FIGs. 5 to 8, the connecting end 321 of the elastic arm 32 is connected to the inner wall of the connecting body 31, thereby increasing the deformation space of the elastic arm 32. In other embodiments, the connecting end 321 of the elastic arm 32 may be connected to an outer wall of the connecting body 31, e.g., the elastic arm 32 may be connected to a bottom wall of the first recess 3111, or the like, which is not limited in the present disclosure. Referring to FIGs. 5 to 8, the locking projection 33 is arranged at the free end 322 of the elastic arm 32 so that the elastic arm 32 is more easily deformed when the locking projection 33 is pressed, thereby allowing the locking projection 33 being withdrawn from the first through hole 11 and/or the second through hole 21. In other embodiments, the locking projection 33 may be arranged at any position between the connecting end 321 and the free end 322 on the elastic arm 32.

Referring to FIGs. 6 to 8, the elastic arm 32 is provided with a reinforcing rib 323 extending parallel to the extension direction of the elastic arm 32. The reinforcing rib 323 includes a first reinforcing rib 323a and a second reinforcing rib 323b. One end of the first reinforcing rib 323a is connected to the connecting end 321 of the elastic arm 32 and to the connecting body 31, and the other end extends towards the free end 322 and is connected to the locking projection 33, so as to increase strength of the elastic arm 32. The second reinforcing rib 323b has a number of two or a multiple of two. The second reinforcing ribs 323b is arranged parallel to the first reinforcing rib 323a and symmetrically disposed on both sides of the first reinforcing rib 323a. The second reinforcing ribs 323b are respectively connected to both the elastic arm 32 and the locking projection 33, thereby increasing strength of a joint between the elastic arm 32 and the locking projection 33. In this embodiment, the second reinforcing ribs 323b are substantially in a triangular plate structure, and two side edges of the second reinforcing rib 323b are respectively connected to the elastic arm 32 and the locking projection 33. A joint between the elastic arm 32 and the connecting body 31 is provided with a connecting rib 324, and therefore connection strength between the elastic arm 32 and the connecting body 31 can be increased.

As shown in FIG. 3 and FIGs. 5 to 6, the locking projection 33 is provided with a wedge surface 331, which is configured to be pushed against the inner wall of the second connecting pipe 2 to allow the locking projection 33 being engaged with or disengaged from the second through hole 21. The wedge surface 331 is arranged on both sides of the locking projection 33 in the extension direction of the elastic arm 32. Specifically, a first wedge surface 331a is formed on a front side surface of the locking projection 33, and a second wedge surface 331b is formed on a rear side surface of the locking projection 33.

When the second connecting pipe 2 is required to be inserted into the transverse pipe section 13 of the first connecting pipe 1, an external force is applied to the locking projection 33 in the second direction D2 in FIG. 3 to allow the locking projection 33 being withdrawn from the first through hole 11. A clearance is formed between the inner wall of the transverse pipe section 13 and at least a portion of the first wedge surface 331a to which one end of the second connecting pipe 2 (hereinafter referred to as the second insertion end 22) is inserted through an end of the transverse pipe section 13 (hereinafter referred to as the first insertion end 15). At this time, the external force applied to the locking projection 33 can be released, and the inner wall of the second connecting pipe 2 keeps moving in the third direction D3 and pushing against the first wedge surface 331a, so that the inner wall of the second connecting pipe 2 is further inserted between the locking projection 33 and the inner wall of the transverse pipe section 13, and so that the second insertion end 22 of the second connecting pipe 2 can pass over the locking projection 33 and be located on a side of the locking projection 33, which faces away from the first insertion end 15 of the transverse pipe section 13. When the insertion pipe section 23 of the second connection pipe 2 is fully inserted into the transverse pipe section 13 and the limiting step 25 is abutted against the second insertion end 22, the second connecting pipe 2 is inserted in place. At this time, the second connecting pipe 2 can be rotated until the second through hole 21 is coincided with the first through hole 11, and the inner wall of the second connecting pipe 2 no longer pushing against the first wedge surface 331a, so that the locking projection 33 is automatically engaged with the first through hole 11 and the second through hole 21 under an elastic restoring force of the elastic arm 32.

Similarly, when the second connecting pipe 2 is required to be separated from the transverse pipe section 13, the external force is applied to the locking projection 33 in the second direction D2 in FIG. 3 to allow the locking projection 33 being withdrawn from the second through hole 21. The clearance is formed between the inner wall of the transverse pipe section 13 and at least a portion of the second wedge surface 331b, to which a portion of the inner wall of the second connecting pipe 2 is inserted. At this time, the external force to the locking projection 33 is released, and the inner wall of the second connecting pipe 2 keeps moving in an opposite direction of the third direction D3 and pushing against the second wedge surface 331b, so that the inner wall of the second connecting pipe 2 is further inserted between the locking projection 33 and the inner wall of the transverse pipe section 13, and so that the second insertion end 22 of the second connecting pipe 2 can pass over the locking projection 33 and be located on a side of the locking projection 33 close to the first insertion end 15 of the transverse pipe section 13. Therefore, the insertion pipe section 23 of the second connecting pipe 2 can be removed from the transverse pipe section 13, and the locking projection 33 is automatically engaged with the first through hole 11 under the elastic restoring force of the elastic arm 32.

In an embodiment, as shown in FIGs. 3, 5 and 6, the connecting member 3 further includes a positioning projection 34. A positioning projection 34 is arranged on the connecting body 31 and located at a position of the connecting body 31 close to the connecting end 321 of the elastic arm 32. The connecting end 321 of the elastic arm 32 is connected to the inner wall of the connecting body 31, and the positioning projection 34 is located at a position of the outer surface of the connecting body 31 opposite to the connecting end 321. The transverse pipe section 13 is provided with a positioning hole 12, and the positioning projection 34 is configured to be engaged with the positioning hole 12. This arrangement facilitates the mounting of the connecting member 3 at a suitable position within the transverse pipe section 13.

In an unshown embodiment, it is also possible that when the second connecting pipe 2 is inserted in place relative to the transverse pipe section 13, the second insertion end 22 of the second connecting pipe 2 is abutted against the positioning projection 34. In this way, whether the second connecting pipe 2 is inserted in place can be determined by whether the second insertion end 22 is abutted against the positioning projection 34. And an accuracy of insertion and positioning for the second connecting pipe 2 can be further improved. In another embodiment, the positioning projection 34 may be arranged on the elastic arm 32.

The technical features of the above embodiments can be combined arbitrarily. To simplify the description, not all possible combinations of the technical features in the above embodiments are described. However, all of the combinations of these technical features should be considered as within the scope of the present disclosure, as long as such combinations do not contradict with each other

The above describe embodiments merely represent several embodiments of the present disclosure, and the description thereof is more specific and detailed, but it should not be construed as limiting the scope of the present disclosure. It should be noted that, several modifications and improvements may be made for those of ordinary skill in the art without departing from the concept of the present disclosure, and these are all within the protection scope of the present disclosure. Therefore, the protection scope of the present disclosure shall be subject to the appended claims.

## Claims

1. A connecting member for connecting a first connecting pipe with a second connecting pipe, comprising:
a connecting body, configured to be arranged in the first connecting pipe and in interference fit with the first connecting pipe; and
an elastic arm, connected to the connecting body and provided with a locking projection;
wherein, the first connecting pipe is provided with a first through hole, the second connecting pipe is provided with a second through hole, and the locking projection is configured to be engaged with the first through hole and the second through hole.

2. The connecting member according to claim 1, wherein one end of the elastic arm serves as a connecting end and is connected to the connecting body, and the other end of the elastic arm serves as a free end and extends in a direction perpendicular to a cross section of the connecting body.

3. The connecting member according to claim 1, wherein one end of the elastic arm serves as a connecting end and is connected to the connecting body, and the other end of the elastic arm serves as a free end and is provided with the locking projection.

4. The connecting member according to claim 1, wherein the connecting body has a hollow annular structure.

5. The connecting member according to claim 4, wherein the connecting end of the elastic arm is connected to an inner wall of the connecting body.

6. The connecting member according to claim 1, further comprising:
a positioning projection, arranged on the connecting body or the elastic arm;
wherein the first connecting pipe is provided with a positioning hole, and the positioning projection is configured to be engaged with the positioning hole.

7. The connecting member according to claim 6, wherein the positioning projection is arranged on the connecting body and is located at a position of the connecting body close to a connecting end of the elastic arm.

8. The connecting member according to claim 6, wherein the connecting body has a first recess located on at least one of upper and lower sides of the connecting body, and the positioning projection is arranged on the first recess.

9. The connecting member according to claim 1, wherein at least one of left and right sides of the connecting body has an elastic supporting arm configured to generate an elastic deformation bending inwards.

10. The connecting member according to any one of claims 1 to 9, further comprising:
a supporting rib, arranged on the connecting body and protruding from an outer surface of the connecting body, the supporting rib being configured to be abutted against an inner wall of the first connecting pipe.

11. The connecting member according to any one of claims 1 to 9, wherein:
(a) the elastic arm is provided with a reinforcing rib connected between the locking projection, the elastic arm and the connecting body, or between the locking projection and the elastic arm; or
(b) the connecting body is integrated with the elastic arm.

12. The connecting member according to claim 1, wherein the connecting member is made of an elastically deformable material.

13. The connecting member according to any one of claims 1 to 9, wherein the locking projection is provided with a wedge surface configured to be pushed against by an inner wall of the second connecting pipe to allow the locking projection being engaged with or disengaged from the second through hole.

14. A connecting pipe structure, comprising a first connecting pipe and a connecting member according to any one of claims 1 to 9.

15. A detachable frame, comprising:
a first connecting pipe;
a second connecting pipe; and
a connecting member according to any one of claims 1 to 13;
wherein the second connecting pipe is detachably connected to the first connecting pipe by the connecting member.
